# EUROPEAN PATENT APPLICATION

(11) **EP 4 643 687 A1**
(43) Date of publication of application: **05.11.2025**
(21) Application number: 23910418.5
(22) Date of filing: 22.12.2023
(51) Int. Cl.: A24F 40/57, A24F 40/46, A24F 40/50

(54) **TEMPERATURE CONTROL METHOD AND APPARATUS, AND ELECTRONIC DEVICE**

(30) Priority: 29.12.2022 CN 202211710698
(71) Applicant: Shenzhen Huabao Collaborative Innovation Technology Research Institute Co., Ltd., Shenzhen, Guangdong 518100 (CN)
(72) Inventor: CHEN, Zhengxi, Shenzhen, Guangdong 518100 (CN)
(74) Representative: Herrero & Asociados, S.L.
(86) International application number: PCT/CN2023/141150
(87) International publication number: WO 2024/140492

(57) **Abstract**

The invention relates to the field of aerosol generators, in particular to a temperature control method, device and electronic equipment, which are applied to an aerosol generator. The method includes: acquiring a first actual resistance value and a second actual resistance value of a heating element; determining whether the heating element has aged according to the first actual resistance value and the second actual resistance value; acquiring a target temperature that the heating element needs to reach by heating, if the heating element has aged; calculating a target resistance value when the heating element reaches the target temperature using TCR conversion according to the target temperature and the first actual resistance value; and controlling the heating element to heat to the target temperature based on the target resistance value. According to the application, whether the resistance is age or not is determined according to the acquired actual resistance value of the current startup and the actual resistance value of the last startup. This allows for precise temperature control of the heating element based on the aged resistance in a targeted manner, preventing errors in temperature control, thereby improving the taste for users.

## Description

### Technical field

The present application relates to the field of aerosol generators, in particular to a temperature control method, device and electronic equipment.

### Background

The aerosol generation system usually consists of an aerosol generator and an aerosol generation product. The aerosol generation product is heated by the aerosol generator to generate aerosol. One way of generating heat by the aerosol generator is using resistive heating. Specifically, the resistance value can be converted into a temperature value using TCR conversion (Temperature Coefficient of Resistance represents the relative change of resistance value when the temperature changes by 1°C). This realize the purpose of adjusting the resistance value to control the temperature.

At present, for the aerosol generator with resistance heating, because the heating module of the aerosol generator needs to be heated repeatedly, it is likely to cause the damage to the substrate of the heating module, such as cracks, which leads to the contact of the heating element of the heating module with air and other substances. This would cause oxidation or corrosion after long-term usage, resulting in the continuous aging of the heating element during use. Moreover, as the heating element's use duration and frequencies increase, its aging degree increases, causing the actual resistance of the heating element to be inconsistent with the initial resistance, resulting in a large deviation in the temperature control of the heating element, and further affecting the taste of the aerosol generated by heating.

### Summary of the invention

In the prior art, the heating module in the aerosol generator ages after a long time of operation, resulting in temperature control errors and failure to reach the desired temperature, impairing the taste of the generated aerosol. In light of this, the present application proposes to provide a temperature control method, device, and electronic equipment with minimal temperature control error, with the goal of addressing the aforementioned issue while also improving taste and user experience.

In a first aspect, an embodiment of the present application provides a temperature control method, which is applied to an aerosol generator and includes:
acquiring a first actual resistance value and a second actual resistance value of a heating element, wherein the first actual resistance value refers to the resistance value measured in real time in a current state of the heating element, and the second actual resistance value refers to the resistance value of the heating element measured and recorded last time;
determining whether the heating element has aged according to the first actual resistance value and the second actual resistance value;
acquiring a target temperature that the heating element needs to reach by heating, if the heating element has aged;
calculating a target resistance value when the heating element reaches the target temperature using TCR conversion according to the target temperature and the first actual resistance value; and
controlling the heating element to heat to the target temperature based on the target resistance value.

In an embodiment, the temperature control method further includes:
acquiring a cooling interval time of the heating element;
determining whether that cool interval time is longer than a preset time; and
acquiring the first actual resistance value and the second actual resistance value, if the cooling interval time is longer than the preset time.

In an embodiment, the temperature control method further includes:
acquiring a real-time measured ambient temperature of the heating element in the current state;
determining whether the ambient temperature reaches a preset temperature;
acquiring temperature of the heating element when the ambient temperature reaches the preset temperature; and
acquiring the first actual resistance value and the second actual resistance value when a difference between the temperature of the heating element and the preset temperature is within a preset range.

In an embodiment, the step of calculating a target resistance value when the heating element reaches the target temperature using TCR conversion according to the target temperature and the first actual resistance value includes:
acquiring the target temperature and the preset temperature, and calculating a temperature change value according to the target temperature and the preset temperature;
calculating a resistance change value using TCR conversion according to the temperature change value and the first actual resistance value; and
acquiring the target resistance value according to the first actual resistance value and the resistance change value.

In an embodiment, the step of acquiring a cooling interval time of the heating element includes:
when the aerosol generator is started, acquiring a first time node when the aerosol generator is started this time and a second time node when the heating element stops heating after the aerosol generator was started last time; and
calculating the cooling interval time according to the first time node and the second time node.

In an embodiment, the step of determining whether the heating element has aged according to the first actual resistance value and the second actual resistance value further includes:
determining whether the first actual resistance value and the second actual resistance value are equal; and
if the first actual resistance value and the second actual resistance value are not equal, it is determined that the heating element has aged.

In an embodiment, the step of controlling the heating element to heat to the target temperature according to the target resistance value includes:
controlling the heating element to heat, and detecting a real-time resistance value of the heating element;
determining whether the real-time resistance value reaches the target resistance value; and
if the real-time resistance value is equal to the target resistance value, it is determined that the heating element has been heated to the target temperature.

In a second aspect, an embodiment of the present application provides a temperature control device, which is applied to an aerosol generator and includes:
a first acquisition unit, configured for acquiring a first actual resistance value and a second actual resistance value of a heating element, wherein the first actual resistance value refers to the resistance value measured in real time in a current state of the heating element, and the second actual resistance value refers to the resistance value of the heating element measured and recorded last time;
a determination unit, configured for determining whether the heating element has aged according to the first actual resistance value and the second actual resistance value;
a second acquisition unit, configured for acquiring a target temperature that the heating element needs to reach by heating, if the heating element has aged;
a calculation unit, configured for calculating a target resistance value when the heating element reaches the target temperature using TCR conversion according to the target temperature and the first actual resistance value; and
a control unit, configured for controlling the heating element to heat to the target temperature based on the target resistance value.

In a third aspect, an embodiment of the present application provides an electronic device, which includes a memory and a processor, the memory stores a computer program, and the processor executes the computer program to implement steps of the temperature control method of the first aspect.

The embodiment of the invention provides a temperature control method, which is applied to an aerosol generator, and the method includes the following steps: acquiring a first actual resistance value and a second actual resistance value of a heating element, wherein the first actual resistance value refers to the resistance value measured in real time in a current state of the heating element, and the second actual resistance value refers to the resistance value of the heating element measured and recorded last time;
determining whether the heating element has aged according to the first actual resistance value and the second actual resistance value; acquiring a target temperature that the heating element needs to reach by heating, if the heating element has aged; calculating a target resistance value when the heating element reaches the target temperature using TCR conversion according to the target temperature and the first actual resistance value; and controlling the heating element to heat to the target temperature based on the target resistance value. Compared with the prior art, the embodiment of the application make it possible to determine with greater accuracy whether the resistance is aging based on the resistance measured in the current state and the resistance measured and recorded the last time. This allows for the specific calculation of the target resistance when the heating element reaches the target temperature based on the resistance that has aged. The heating element is then accurately controlled to heat to reach the target temperature based on the target resistance, realizing accurate control over the heating element's temperature, avoiding the issue of temperature error caused by aging in the process of temperature control of the heating element, and thus enhancing the taste when users inhale the aerosol.

### Brief description of the drawings

In order to explain the technical solution of the embodiments of this application more clearly, the drawings described in the description of the embodiments of this application will be briefly introduced below. It should be understood that, the drawings in the present application and their accompanying detailed description are directed to merely exemplary embodiments of the application, and should not be considered as limiting the scope. In the drawings, similar components are given similar reference numbers.
Fig. 1 shows a flowchart of a temperature control method provided by an embodiment of the present application.
Fig. 2 shows another flowchart of a temperature control method provided by an embodiment of the present application.
Fig. 3 shows a schematic flow chart of heating control of a heating element provided by an embodiment of the present application.
Fig. 4 shows a structural schematic diagram of a temperature control device provided by an embodiment of the present application.

### Detailed description

The technical solutions in the embodiments of the present application will be clearly and completely described below with reference to the drawings in the embodiments of this application. Obviously, the described embodiments are merely part of the embodiments of this application, not all of them.

### Embodiment 1

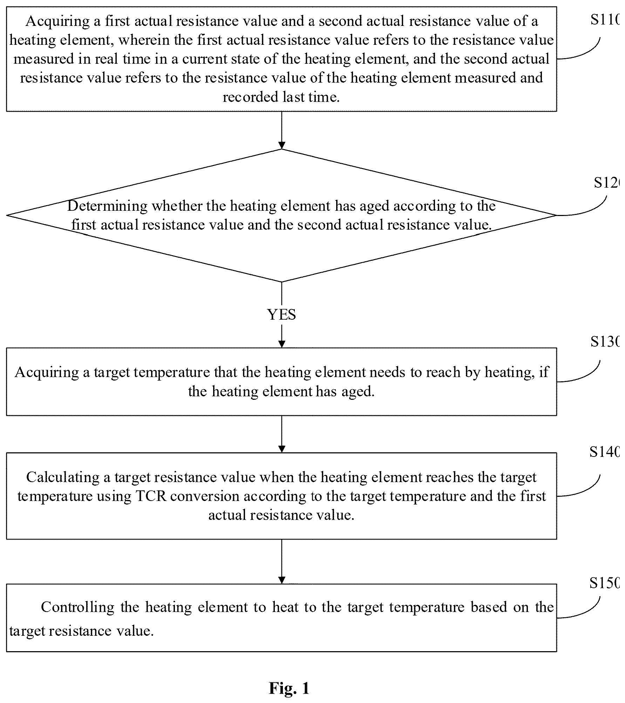

Fig. 1 shows a flow diagram of a temperature control method provided by an embodiment of the present application, which is applied to an aerosol generator and specifically includes the following steps:
Step S110: acquiring a first actual resistance value and a second actual resistance value of a heating element, wherein the first actual resistance value refers to the resistance value measured in real time in a current state of the heating element, and the second actual resistance value refers to the resistance value of the heating element measured and recorded last time.

Specifically, the first actual resistance value refers to the resistance value of the heating element detected in real time in the current state when the aerosol generator is started this time, and the second actual resistance value refers to the resistance value detected and recorded when the aerosol generator was started last time. It can be understood that after the start of the aerosol generator, the first actual resistance value is recorded accordingly, and the first actual resistance value of the startup this time is updated to the second actual resistance value, allowing the measured first actual resistance value to be compared with the most recent second actual resistance value when the aerosol generator is started next time. This ensures the timeliness of data, and further makes the future determination of whether the resistance of the heating element has aged more timely and accurate.

Understandably, when the aerosol generator is started for the first time, it will automatically read the resistance value of the heating element. Considering the errors generated in the process of resistance production, the resistance value of the heating element is usually composed of nominal resistance and error resistance during factory calibration. The error resistance is the machining error value in the production process of the corresponding resistance of the heating element, which is a fixed value and will not change with the aging of the resistance. Furthermore, when the aerosol generator is used for the first time, the first actual resistance obtained is the sum of the resistance corresponding to the nominal resistance and the resistance corresponding to the error resistance, and the second actual resistance is the resistance corresponding to the nominal resistance. For example, if the error resistance is 0.2Ω and the nominal resistance is 5Ω, then the first actual resistance of the heating element is actually 5.2Q and the second actual resistance is 5Ω. Therefore, it can be considered that every time in the temperature control process, this embodiment eliminates the influence of the machining error of in resistance process of the heating element on temperature control and improves temperature control accuracy.

Step S120: determining whether the heating element has aged according to the first actual resistance value and the second actual resistance value.

In particular, aging refers to the resistance error of the heating element as the heating frequencies and total heating duration increase. Under normal circumstances, the resistance value of the heating element will increase with age. Therefore, after the heating element is started this time, the resistance measured in the current state is compared with the resistance measured in the last startup, which can quickly determine whether the heating element has aged in the time interval between two startups, allowing for more accurate temperature control of the heating element.

Step S130: acquiring a target temperature that the heating element needs to reach by heating, if the heating element has aged.

If the first actual resistance value is greater than the second actual resistance value, indicating that the heating element has aged, then the target resistance value of the heating element when it reaches the target temperature needs to be calculated according to the read target temperature of the heating element, thus ensuring the timeliness of data to a certain extent. Typically, the target temperature for the heating element to reach is usually a preset fixed temperature, for example, 300°C. That is, the point at which the heating element heats to the target temperature is the temperature at which the user feels the best taste.

Step S140: calculating a target resistance value when the heating element reaches the target temperature using TCR conversion according to the target temperature and the first actual resistance value.

It can be understood that the TCR conversion refers to the calculation of the target resistance value of the heating element when it reaches the target temperature by using the characteristics of the temperature coefficient of resistance, specifically the relative change of the resistance value of the heating element when the temperature changes by 1°C. The temperature coefficient of resistance corresponding to the resistance of the heating element is a fixed value, and the fixed value is mainly related to the resistance material, that is, the temperature coefficient of resistance of the heating element is determined immediately after the resistance of the heating element is manufactured. As a result, once the current temperature, the first actual resistance value, the target temperature, and the resistance temperature coefficient of the heating element are determined, the TCR conversion can be used to easily and efficiently calculate the target resistance value when the heating element reaches the target temperature.

Step S150: controlling the heating element to heat to the target temperature based on the target resistance value.

Because the resistance values of the heating elements differ before heating, the target resistance values that the heating elements need to reach when heated to the target temperature differ as well. However, as the resistor ages, its resistance value will eventually vary. As a result, in this embodiment, after determining the aging of the resistor, the target resistance value is recalculated, allowing the heating element to be precisely controlled to heat to the target temperature based on the target resistance value. For example, if the first resistance measurement is 5Ω and the second is 4.8Ω, it indicates that the heating element has aged. As a result, the target resistance value is recalculated based on the first actual resistance value, and then the heating of the heating element is controlled according to the target resistance value. This avoids the situation where the heating element cannot reach the target temperature because it is directly controlled based on the target resistance value calculated with the second actual resistance value. Hence, the temperature control accuracy of the heating element is improved, and users would be satisfied with better taste.

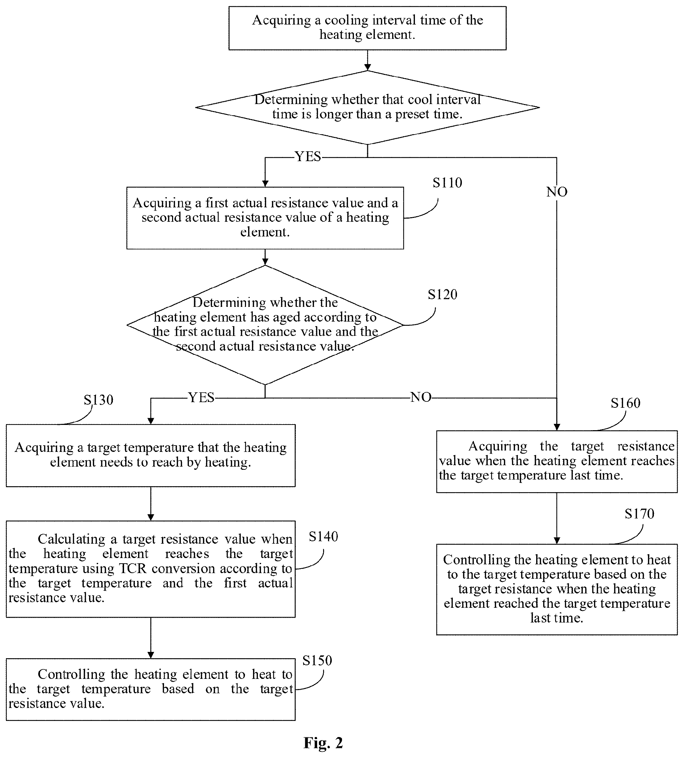

In an embodiment, as shown in Fig. 2, the temperature control method further includes:
Step S180: acquiring a cooling interval time of the heating element.
Step S190: determining whether that cool interval time is longer than a preset time.

If the cooling interval time is greater than the preset interval time, step S110 is directly executed. It can be understood that the cooling interval refers to the interval between when the heating element stops heating after the last startup of the aerosol generator and when the aerosol generator is started this time, and the preset time is usually expressed by the average time taken for the heating element to drop from the target temperature to the preset temperature range. When the cooling interval is less than or equal to the preset time, it can be considered that the interval between two uses of the electronic cigarette is very short and the heating element is not completely cooled, then steps S160 and S170 are executed at this time.

Step S160: acquiring the target resistance value when the heating element reaches the target temperature last time.

Step S170: controlling the heating element to heat to the target temperature based on the target resistance when the heating element reached the target temperature last time.

Specifically, this embodiment can swiftly identify whether the heating element has been totally cooled by determining whether the cooling interval is longer than the preset time. If the heating element is not totally cooled, it is not necessary to acquire the first actual resistance value, because the first actual resistance value is likely to be affected by the external temperature. Therefore, this embodiment defines the cooling interval, thereby eliminating the interference of some external elements.

In an embodiment, the temperature control method further includes:
acquiring a real-time measured ambient temperature of the heating element in the current state;
determining whether the ambient temperature reaches a preset temperature;
acquiring temperature of the heating element when the ambient temperature reaches the preset temperature; and

When the difference between the temperature of the heating element and the preset temperature is within the preset range, step S 110 is directly executed.

It can be understood that the optimal state of the ambient temperature in this embodiment is at normal temperature, that is, the preset temperature is 25°C. And it is difficult to keep the ambient temperature at normal temperature because of the actual ambient temperature error. The difference between the temperature of the heating element and the ambient temperature may be set to be greater than or equal to 0°C and less than or equal to 5°C. The particular difference may be set according to the actual situation, thus it is not limited here. Therefore, when the aerosol generator is charging, it generates heat, resulting in a high ambient temperature, or when the aerosol generator is next to a heat source, such as a baking box, it would also detect a high ambient temperature. At this point, even if the difference between the temperature of the heating element and the ambient temperature is within a preset range, step S110 will not be executed, but steps S 160 and S170 will be performed.

Therefore, by taking into account the real ambient temperature difference, this embodiment allows for a more thorough and flexible assessment of the temperature difference between the heating element and the surrounding temperature. Moreover, in order to ensure that the ambient temperature is within the preset temperature range, the difference between the temperature of the heating element and the preset temperature range must be controlled within the preset range, which effectively eliminates the influence of the ambient temperature on temperature control, leaving only the aging of the heating element's resistance to consider.

In particular, in this embodiment, step S110 can only be performed when the cooling interval requirement is satisfied, allowing the interference of external temperature factors to be be eliminated by the cooling condition of the heating element. Alternatively, step S110 can be performed when the cooling interval requirement and the relationship between the temperature of the heating element and the ambient temperature are met at the same time. And steps S160 and S 170 can be performed directly only when the relationship between the temperature of the heating element and the ambient temperature is satisfied but not the cooling interval requirement. It further avoids the interference of the external environment temperature and the temperature of the heating element itself on the temperature control, provides the accuracy of temperature control aiming at the resistance aging in the heating element, and greatly reduces the error.

In an embodiment, the step of calculating a target resistance value when the heating element reaches the target temperature using TCR conversion according to the target temperature and the first actual resistance value includes:
acquiring the target temperature and the preset temperature, and calculating a temperature change value according to the target temperature and the preset temperature;
calculating a resistance change value using TCR conversion according to the temperature change value and the first actual resistance value; and
acquiring the target resistance value according to the first actual resistance value and the resistance change value.

Specifically, TCR conversion is explained by formula: Rt-R0=(R0*TCR)*(Tt-T), where Tt represents the target temperature, T represents the preset temperature, i.e., normal temperature, Tt-T represents the temperature change value, Rt-R0 represents the resistance change value, Rt represents the target resistance value, RO represents the first actual resistance value, and TCR represents the temperature coefficient of resistance of the heating element. First, the temperature change value is calculated based on the target temperature and the preset temperature. The resistance change value is then calculated based on the first actual resistance value, the the temperature coefficient of resistance of the heating element, and the temperature change value. Then, the target resistance value is obtained by adding the first actual resistance value to the resistance change value. As a result, this embodiment makes it possible to swiftly calculate the target resistance value using the calculation formula or transformation formula related to the TCR conversion rule, and then precisely control the heating element to heat to the target temperature based on the target resistance value.

In an embodiment, the step of acquiring a cooling interval time of the heating element includes:
when the aerosol generator is started, acquiring a first time node when the aerosol generator is started this time and a second time node when the heating element stops heating after the aerosol generator was started last time; and
calculating the cooling interval time according to the first time node and the second time node.

The aerosol generator of this embodiment is also equipped with an RTC (Real-time clock), which can read the time point when the aerosol generator is started every time and the time point when the heating element stops heating when the aerosol generator is started last time, and store all the read time points in the memory. Therefore, when determining the cooling interval time of the heating element, the first time node when the aerosol generator is started this time and the second time node when the heating element stopped heating after the last start are respectively obtained from memory. The first time point is subtracted from the second time point to obtain the cooling interval time of the heating element. For instance, the cooling interval time of the heating element can be calculated as follows: if the aerosol generator is started at the first time node of 10:30 for this time, and it stops heating at the second time node of 10:00 last time, then the cooling interval time of the heating element is 30 minutes.

Specifically, when the heating element does not stop heating every time, the RTC time is read, and the corresponding time point of each time when the heating element does not stop heating is recorded, as well as the heating frequencies and total heating duration of the heating element after each use of the aerosol generator. Specifically, when the aerosol generator is turned on and the heating element generates heat for the first time, the number of heating frequency is 1, and the total number of heating frequency is increased by one each time the heating element is heated, and the heating start time and heating end time are read during each start of the aerosol generator, allowing the heating duration of the heating element to be determined. Thus, the heating duration of the heating element needs to be updated every time. Thus, by recording the heating frequencies and total heating duration of the heating element, the occurrence time of aging of the resistance of the heating element can be determined.

In an embodiment, the step of determining whether the heating element has aged according to the first actual resistance value and the second actual resistance value further includes:
determining whether the first actual resistance value and the second actual resistance value are equal; and
if the first actual resistance value and the second actual resistance value are not equal, it is determined that the heating element has aged.

It should be noted that during continuous usage, as the heating frequencies and total heating duration rise, the resistance of the heating element will age to some level. Typically, as the resistance ages, the corresponding resistance value increases. Therefore, when the first and second actual resistance values are not equal, i.e., the first actual resistance value is greater than the second actual resistance value, it is determined that the heating element has aged. The specific aging resistance value of the resistor can be determined by the difference between the first actual resistance and the second actual resistance. For instance, if the first resistance is 5Ω and the second resistance is 4.8Ω, the aging resistance, which corresponds to the resistance of the heating element, is 0.2Ω.

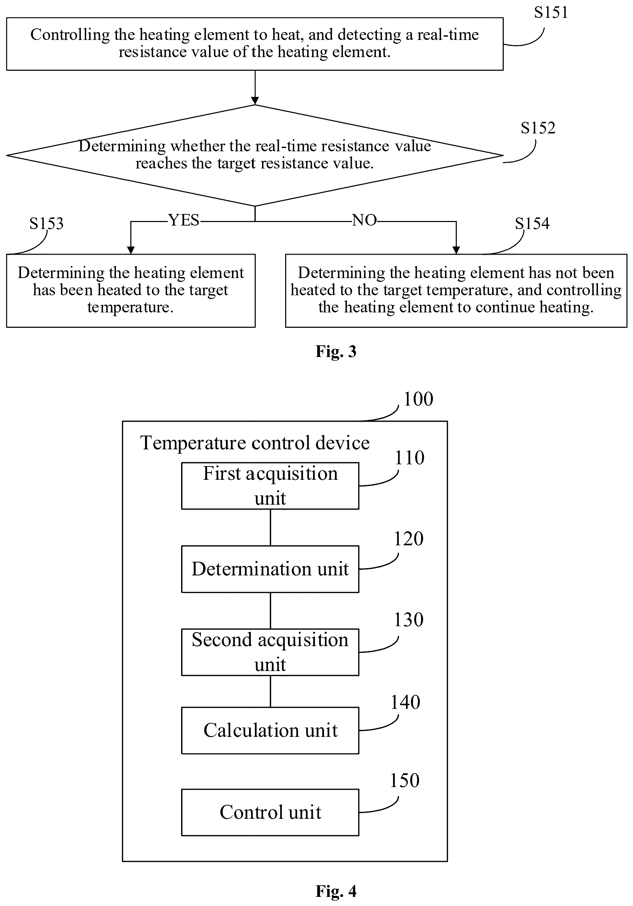

In an embodiment, Fig. 3 shows the step S150, which includes:
Step S151: controlling the heating element to heat, and detecting a real-time resistance value of the heating element.
Step S152: determining whether the real-time resistance value reaches the target resistance value.

If the real-time resistance value is equal to the target resistance value, step S153 is executed, i.e., determining the heating element has been heated to the target temperature. If the real-time resistance value is not equal to the target resistance value, step S154 is executed, i.e., determining the heating element has not been heated to the target temperature, and controlling the heating element to continue heating.

After determining the target resistance value, the heating element can be controlled to heat, and the real-time resistance value of the heating element can be monitored throughout the heating process. It can be understood that the real-time resistance value of the heating element will gradually increase as the temperature rises during the heating process, until the real-time resistance value of the heating element reaches the target resistance value, indicating that the heating element has been heated to the desired temperature. Therefore, this embodiment can accurately determine whether the heating element has been heated to the target temperature in real time by detecting the real-time resistance of the heating element.

### Embodiment 2

Fig. 4 is a structural schematic diagram of a temperature control device provided by an embodiment of the present application. The emperature control device 100 is applied to an aerosol generator, and specifically includes a first acquisition unit 110, a determination unit 120, a second acquisition unit 130, a calculation unit 140 and a control unit 150.

The first acquisition unit **110** is configured for acquiring a first actual resistance value and a second actual resistance value of a heating element, wherein the first actual resistance value refers to the resistance value measured in real time in a current state of the heating element, and the second actual resistance value refers to the resistance value of the heating element measured and recorded last time.

The determination unit 120 is configured for determining whether the heating element has aged according to the first actual resistance value and the second actual resistance value.

The second acquisition unit 130 is configured for acquiring a target temperature that the heating element needs to reach by heating, if the heating element has aged.

The calculation unit 140 is configured for calculating a target resistance value when the heating element reaches the target temperature using TCR conversion according to the target temperature and the first actual resistance value.

The control unit 150 is configured for controlling the heating element to heat to the target temperature based on the target resistance value.

The temperature control device provided by the embodiment of the present application can realize those steps corresponding to the temperature control method in the above-mentioned Embodiment 1, and the optional solutions in the above-mentioned embodiment 1 are also applicable to this embodiment, so the details are not repeated here.

The embodiment of that application also provide an electronic device, which includes a memory and a processor, the memory stores a computer program, and the processor executes the computer program to implement steps of the temperature control method as described in embodiment 1.

The above are merely the specific embodiments of the present application, but the scope of protection of the present application is not limited to them. A person skilled in the art can easily envision alterations or substitutes within the technical scope disclosed by the current application, which shall be included in the scope of protection of the present application.

## Claims

1. A temperature control method, applied to an aerosol generator, comprising:
acquiring a first actual resistance value and a second actual resistance value of a heating element, wherein the first actual resistance value refers to the resistance value measured in real time in a current state of the heating element, and the second actual resistance value refers to the resistance value of the heating element measured and recorded last time;
determining whether the heating element has aged according to the first actual resistance value and the second actual resistance value;
acquiring a target temperature that the heating element needs to reach by heating, if the heating element has aged;
calculating a target resistance value when the heating element reaches the target temperature using TCR conversion according to the target temperature and the first actual resistance value; and
controlling the heating element to heat to the target temperature based on the target resistance value.

2. The temperature control method of claim 1, further comprising:
acquiring a cooling interval time of the heating element;
determining whether that cool interval time is longer than a preset time; and
acquiring the first actual resistance value and the second actual resistance value, if the cooling interval time is longer than the preset time.

3. The temperature control method of claim 2, further comprising:
acquiring a real-time measured ambient temperature of the heating element in the current state;
determining whether the ambient temperature reaches a preset temperature;
acquiring temperature of the heating element when the ambient temperature reaches the preset temperature; and
acquiring the first actual resistance value and the second actual resistance value when a difference between the temperature of the heating element and the ambient temperature is within a preset range.

4. The temperature control method of claim 3, wherein the step of calculating a target resistance value when the heating element reaches the target temperature using TCR conversion according to the target temperature and the first actual resistance value comprises:
acquiring the target temperature and the preset temperature, and calculating a temperature change value according to the target temperature and the preset temperature;
calculating a resistance change value using TCR conversion according to the temperature change value, the first actual resistance value and a preset resistance temperature coefficient; and
acquiring the target resistance value according to the first actual resistance value and the resistance change value.

5. The temperature control method of claim 1, wherein the step of acquiring a cooling interval time of the heating element comprises:
when the aerosol generator is started, acquiring a first time node when the aerosol generator is started this time and a second time node when the heating element stops heating after the aerosol generator was started last time; and
calculating the cooling interval time according to the first time node and the second time node.

6. The temperature control method of claim 1, wherein the step of determining whether the heating element has aged according to the first actual resistance value and the second actual resistance value further comprises:
determining whether the first actual resistance value and the second actual resistance value are equal; and
if the first actual resistance value and the second actual resistance value are not equal, it is determined that the heating element has aged.

7. The temperature control method of claim 1, wherein the step of controlling the heating element to heat to the target temperature according to the target resistance value comprises:
controlling the heating element to heat, and detecting a real-time resistance value of the heating element;
determining whether the real-time resistance value reaches the target resistance value; and
if the real-time resistance value is equal to the target resistance value, it is determined that the heating element has been heated to the target temperature.

8. A temperature control device, applied to an aerosol generator, comprising:
a first acquisition unit, configured for acquiring a first actual resistance value and a second actual resistance value of a heating element, wherein the first actual resistance value refers to the resistance value measured in real time in a current state of the heating element, and the second actual resistance value refers to the resistance value of the heating element measured and recorded last time;
a determination unit, configured for determining whether the heating element has aged according to the first actual resistance value and the second actual resistance value;
a second acquisition unit, configured for acquiring a target temperature that the heating element needs to reach by heating, if the heating element has aged;
a calculation unit, configured for calculating a target resistance value when the heating element reaches the target temperature using TCR conversion according to the target temperature and the first actual resistance value; and
a control unit, configured for controlling the heating element to heat to the target temperature based on the target resistance value.

9. An electronic equipment, comprising a memory and a processor, wherein the memory stores a computer program, and the processor executes the computer program to implement
